(19) Europäisches Patentamt
European Patent Office
Office européen des brevets

(11) **EP 3 530 906 A1**

(12) **EUROPEAN PATENT APPLICATION**
published in accordance with Art. 153(4) EPC

(43) Date of publication:
**28.08.2019 Bulletin 2019/35**

(51) Int Cl.:
**F02B 23/06** (2006.01)     **F02F 3/26** (2006.01)
**F16J 1/09** (2006.01)

(21) Application number: **17874938.8**

(22) Date of filing: **15.11.2017**

(86) International application number:
**PCT/JP2017/041127**

(87) International publication number:
**WO 2018/097009 (31.05.2018 Gazette 2018/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.11.2016 JP 2016226466**

(71) Applicant: **Mazda Motor Corporation**
**Aki-gun, Hiroshima 730-8670 (JP)**

(72) Inventors:
• **KANZAKI, Jun**
  **Aki-gun**
  **Hiroshima 730-8670 (JP)**
• **KATAOKA, Motoshi**
  **Aki-gun**
  **Hiroshima 730-8670 (JP)**
• **KIM, Sangkyu**
  **Aki-gun**
  **Hiroshima 730-8670 (JP)**
• **IIDA, Shinya**
  **Aki-gun**
  **Hiroshima 730-8670 (JP)**

(74) Representative: **Müller-Boré & Partner**
**Patentanwälte PartG mbB**
**Friedenheimer Brücke 21**
**80639 München (DE)**

(54) **DIESEL ENGINE**

(57)     A diesel engine includes a cylinder (12), a cylinder head (14), a fuel injection valve (17), and a piston (13). The piston (13) has a cavity (30) recessed so as to be capable of receiving fuel injected from the fuel injection valve (17) when the piston (13) is positioned at a top dead center, and a notch (40) formed by recessing a part of a circumferential edge of an opening of the cavity (30) radially outward. The notch (40) inclines radially inward at an angle of 0° to 50° relative to a center axis of the cylinder (12a) from a piston crown surface (13a) toward an inner circumferential wall surface (30a).

FIG. 5

EP 3 530 906 A1

## Description

### Technical Field

The present invention relates to a diesel engine, and in particular, to a direct injection diesel engine in which a crown surface of a piston is recessed to have a cavity to which fuel is directly injected from a fuel injection valve.

### Background Art

A diesel engine is known in which a cavity is formed on a crown surface of a piston. In this engine, after arriving near a circumferential edge of the cavity, fuel injected from a fuel injection valve is guided to a center side of the cavity along an inner circumferential wall surface to have promoted mixing with air. In particular, in a medium load range or a high load range where a relatively large amount of fuel is injected, penetration (penetration force) of spray injected from the fuel injection valve is strong, and even at a place far from the fuel injection valve, the speed of the spray is maintained high to have promoted mixing with air.

On the other hand, in a low load range with a small fuel injection amount, spray is liable to stay near the circumferential edge of the cavity to reduce mixability with air. Although for improving mixability with air, it is effective to increase penetration of spray, when the penetration of the spray is excessively strong, an amount of heat dissipated from a wall surface near the circumferential edge of the cavity is increased to increase a cooling loss.

For solving the above problem, Patent Literature 1 discloses designing a shape of a cavity and a shape (length, bore) of a nozzle hole of a fuel injection valve to have a predetermined relationship such that penetration of spray does not become excessively strong in order to suppress a cooling loss in a low load range.

However, according to Patent Literature 1, while an increase in a cooling loss can be suppressed in a low load range, spray fluidity is low, so that it is impossible to promote mixing with air in the cavity. Therefore, local combustion is liable to occur near the circumferential edge of the cavity to increase NOx and soot in some cases due to high temperature and lack of oxygen derived from the local combustion.

### Citation List

### Patent Literature

Patent Literature 1: Japanese Unexamined Patent Publication No. 2015-232288

### Summary of Invention

The present invention has been made in light of the above circumstances, and an object of the present invention is to provide a diesel engine in which even spray having weak penetration is allowed to have fluidity in a cavity increased to have promoted mixing with air.

In order to achieve the above object, a diesel engine of the present invention includes a cylinder; a cylinder head which covers an end surface of the cylinder; a fuel injection valve attached to the cylinder head; and a piston provided inside the cylinder so as to be reciprocatable. The piston has a cavity recessed from a crown surface to a side opposite to the cylinder head so as to be capable of receiving fuel injected from the fuel injection valve when the piston is positioned at a top dead center. The piston further has, in a part of a circumferential edge of an opening of the cavity, a notch which is recessed radially outward in a region from an inner circumferential wall surface of the cavity over to the crown surface. The notch inclines radially inward at an angle of 0° to 50° relative to a center axis of the cylinder from the crown surface toward the inner circumferential wall surface.

### Brief Description of Drawings

FIG. 1 is a sectional view schematically showing a combustion chamber of an engine according to one embodiment of the present invention.
FIG. 2 is a sectional view of a cavity forming the combustion chamber.
FIG. 3 is a plan view of a piston in which the cavity is provided.
FIG. 4A is a side view showing a structure of a fuel injection valve.
FIG. 4B is a sectional view showing the structure of the fuel injection valve.
FIG. 5 is a perspective view of the piston seen from a crown surface side.

FIG. 6 is a front view of a notch seen from arrow A in FIG. 5.

FIG. 7 is an explanatory view showing spray and an air flow in the cavity.

FIG. 8 is an explanatory view showing a combustion state in a first half of the combustion.

FIG. 9 is an explanatory view showing a combustion state in a latter half of the combustion.

FIG. 10 is an explanatory view showing spray and an air flow in the cavity according to a modification.

FIG. 11 is a plan view showing a piston according to the modification.

FIG. 12 is an explanatory view showing spray and an air flow in the piston shown in FIG. 11.

FIG. 13 is an explanatory view showing a modification of spray and an air flow in the piston shown in FIG. 11.

FIG. 14 is a sectional view showing a cavity in a case where an inclination angle of a circumferential wall portion is changed.

FIG. 15 is an explanatory view showing spray and an air flow in the cavity shown in FIG. 14.

## Description of Embodiments

Embodiments according to the present invention will be described below with reference to the accompanying drawings. The following description is substantially for illustrative purpose only and is not intended to limit the present invention, and applications or usages of the present invention. Additionally, the drawings are schematic in which a ratio of each distance and the like are different from real counterparts.

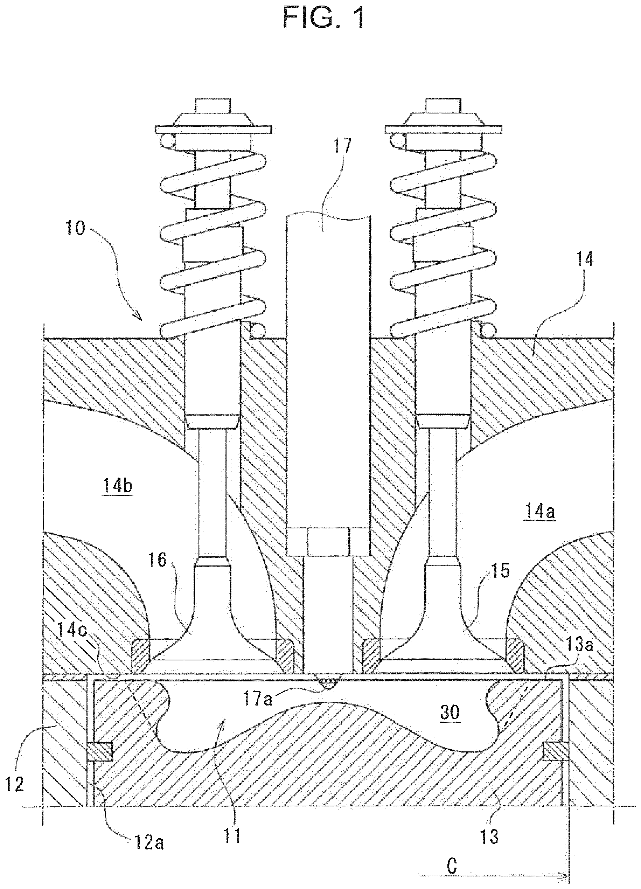

FIG. 1 shows a combustion chamber structure of a diesel engine according to one embodiment of the present invention, in which a combustion chamber 11 of an engine 10 is zoned by an inner circumferential surface of a cylinder 12a formed in a cylinder block 12, a crown surface 13a (hereinafter, referred to as a piston crown surface 13a) of a piston 13 reciprocating in the cylinder 12a, a lower surface 14c of a cylinder head 14 opposite to the piston crown surface 13a, and lower surfaces of an intake valve 15 and an exhaust valve 16 for opening and closing an intake port 14a and an exhaust port 14b formed in the cylinder head 14.

The piston crown surface 13a has a cavity 30 formed to be recessed toward a direction away from the lower surface 14c of the cylinder head 14 and has an inner space also forming the combustion chamber 11. The cavity 30 is configured to have a generally circular shape in a plan view as a basic shape. The cylinder head 14 has a fuel injection valve 17 attached thereto. The fuel injection valve 17 is positioned at the center of the cylinder 12a in a plan view and is disposed so as to have a front end facing the combustion chamber 11.

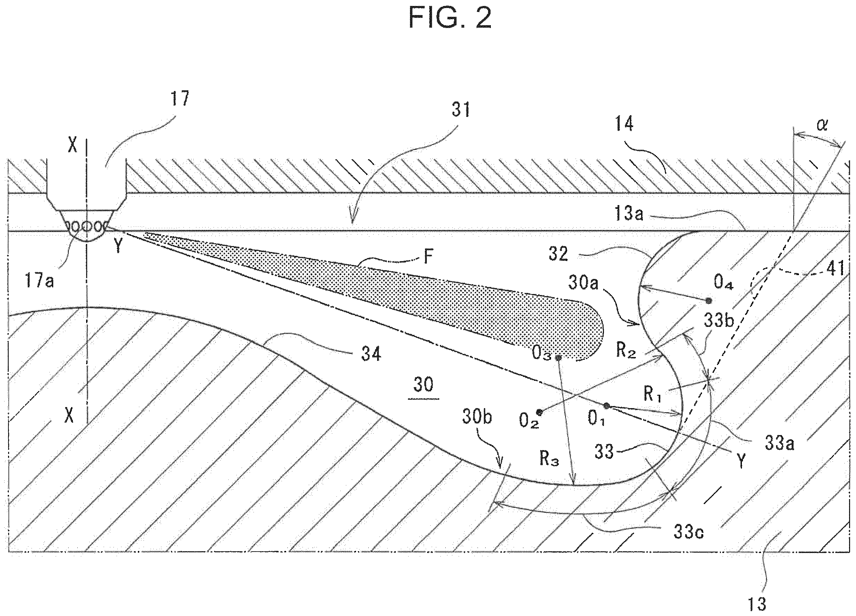

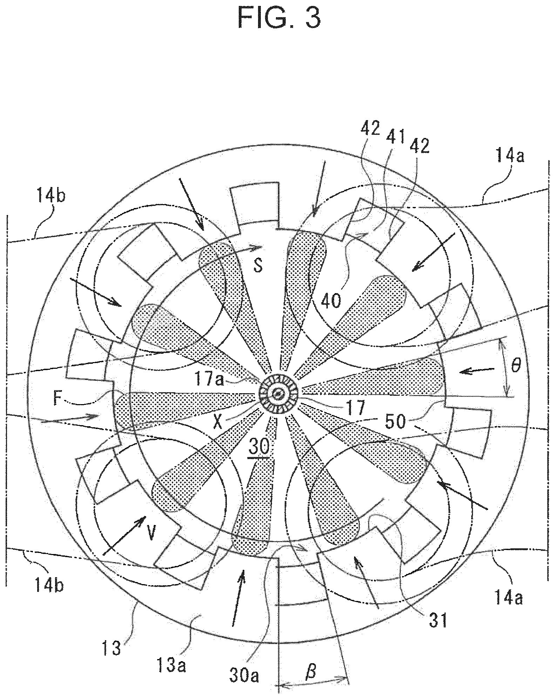

FIG. 2 is a sectional view of the combustion chamber 11 on a cross section passing through a center axis X of the cylinder 12a and FIG. 3 is a plan view of the combustion chamber 11. Both FIG. 2 and FIG. 3 show the piston 13 positioned at a compression top dead center, and also show spray of fuel injected from the fuel injection valve 17, where a reference code F denotes the spray. The cavity 30 is designed to have a shape and size that allow the fuel (spray F) injected from the fuel injection valve 17 to be received when at least the piston 13 is positioned at or near the compression top dead center.

As shown in FIG. 2, the cavity 30 is configured to be of a so-called reentrant type. Specifically, the cavity 30 includes a lip portion 32, a peripheral recessed portion 33, and a central portion 34. The lip portion 32 is positioned at a circumferential edge of an opening 31 (hereinafter, referred to as the cavity opening 31) on an upper surface of the cavity 30 and has a smaller diameter than the inside of the cavity 30. The peripheral recessed portion 33 extends from the lip portion 32 toward a bottom of the cavity 30. The central portion 34 extends from the peripheral recessed portion 33 toward a central part of the cavity. The peripheral recessed portion 33 is recessed radially outward so as to have a larger diameter than the lip portion 32. The central portion 34 has a mountain shape protruding toward the fuel injection valve 17 positioned above a center part of the central portion 34.

In other words, the cavity 30 has an inner circumferential wall surface 30a forming a radially outer wall of the cavity 30 and a bottom wall 30b forming the bottom of the cavity 30. The inner circumferential wall surface 30a includes the lip portion 32 and a part of the peripheral recessed portion 33 on a radially outer side. The bottom wall 30b includes the central portion 34 and a part of the peripheral recessed portion 33 on a bottom side.

As shown in FIG. 3, in the circumferential edge of the cavity opening 31, a plurality of notches 40 aligned at an interval in a circumferential direction is radially formed. Each notch 40 is formed by radially outwardly recessing a region extending from the inner circumferential wall surface 30a of the cavity 30 over to the piston crown surface 13a. The plurality of notches 40 serves to increase fluidity of the spray F in the cavity 30 by introducing an air flow on the piston crown surface 13a into the cavity 30. Details will be described later.

A plurality of nozzle holes 17a ... 17a is formed around a front end of the fuel injection valve 17. The fuel injection valve 17 is designed to inject fuel radially from the nozzle holes 17a as shown in FIG. 3 when the piston 13 is at or near the compression top dead center, and is also designed such that as shown in FIG. 2, the spray F is directed to the proximity of a boundary between the lip portion 32 and the peripheral recessed portion 33 of the cavity 30.

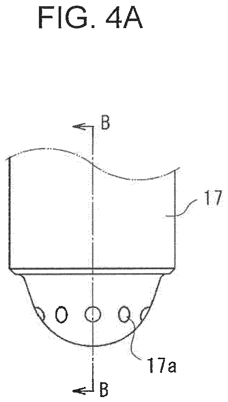

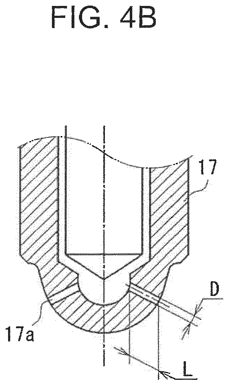

In the present embodiment, ten nozzle holes 17a are provided at equal intervals in a circumferential direction, and have the same size. FIGS. 4A and 4B show the front end of the fuel injection valve 17 in enlarged manner, FIG. 4A being a side view and FIG. 4B being a sectional view taken along line B-B in FIG. 4A.

As shown in FIG. 4B, the nozzle hole 17a is formed to have predetermined nozzle hole diameter D and nozzle hole length L. The nozzle hole diameter D and the nozzle hole length L of the nozzle hole 17a are designed to satisfy a predetermined relationship in relation to a cylinder diameter C (see FIG. 1), thereby realizing the spray F of low penetration in a low load range to reduce a cooling loss, as well as reducing soot in middle and high load ranges.

Returning to FIG. 2, the peripheral recessed portion 33 of the cavity 30 includes a first portion 33a spaced most apart from the fuel injection valve 17, a second portion 33b positioned closer to the lip portion 32 than the first portion 33a, and a third portion 33c positioned closer to the central portion 34 than the first portion 33a. The first portion 33a, the second portion 33b, and the third portion 33c are formed with arcs having centers $O_1$, $O_2$, and $O_3$ on the center side of the cavity 30, respectively.

Also in the present embodiment, a radius $R_2$ of the arc of the second portion 33b is set to be equal to a radius $R_3$ of the arc of the third portion, and a radius $R_1$ of the arc of the first portion 33a is set to be smaller than the radii $R_2$ and $R_3$. This makes a cross sectional shape of the peripheral recessed portion 33 be a linearly symmetrical shape about a straight line Y as a center, the straight line Y linking a center position of the first portion 33a spaced most apart from the nozzle hole 17a of the fuel injection valve 17 and the nozzle hole 17a. In other words, the peripheral recessed portion 33 is formed such that a part on the second portion 33b side with respect to the straight line Y and a part on the third portion 33c side with respect to the straight line Y are so as to be symmetrical to each other with respect to the straight line Y.

The lip portion 32 continuous with the second portion 33b of the peripheral recessed portion 33 is formed with an arc having a center $O_4$ on a side opposite to the center of the cavity 30 on a cross section including the center axis X of the cylinder 12a.

As indicated by a chain double-dashed line in FIG. 3, the two intake ports 14a and the two exhaust ports 14b are open at the four corners of the combustion chamber 11. The two intake ports 14a are formed with a helical port and/or a tangential port. An axis of a part of at least one of the intake ports 14a (a port positioned lower right of FIG. 3 in the present embodiment) is designed to be oriented clockwise in FIG. 3, the part being open in the combustion chamber 11.

This makes it easy for new air introduced into the combustion chamber 11 through the intake port 14a positioned lower right in FIG. 3 to be introduced clockwise toward the combustion chamber 11. Thus, a swirl flow S flowing clockwise is generated in the combustion chamber 11. The swirl flow S is generated not only above the piston crown surface 13a but also within the cavity 30.

Also in the combustion chamber 11, there is generated a squish flow V flowing from a radially outer side to a radially inner side such that air positioned between the piston crown surface 13a and the lower surface 14c of the cylinder head 14 flows into the cavity 30 as the piston 13 goes toward the compression top dead center. In other words, in the present embodiment, the swirl flow S and the squish flow V are generated in the combustion chamber 11.

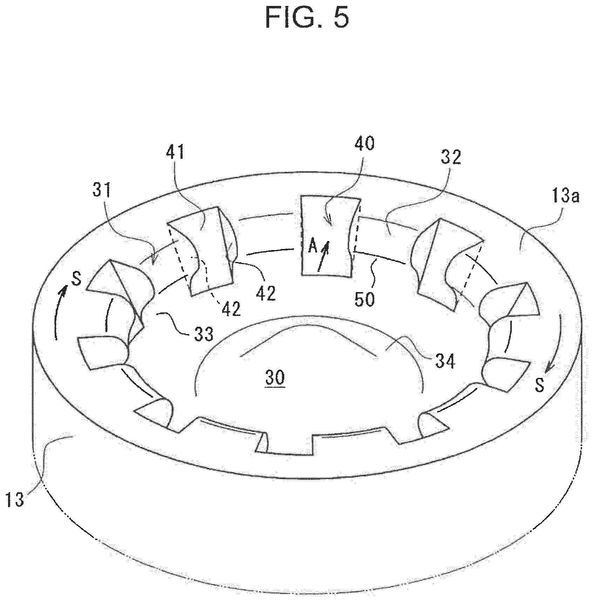

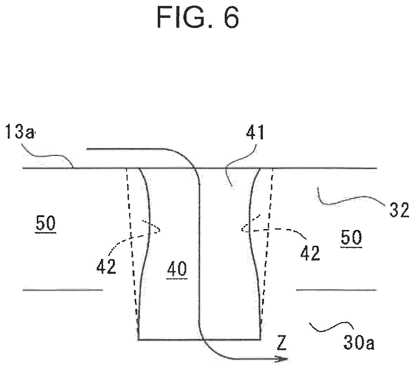

In the following, detailed description will be made of the notch 40 formed at the circumferential edge of the cavity opening 31 of the piston 13 with reference to FIG. 5 and FIG. 6.

FIG. 5 is a perspective view of the piston 13 and shows the cavity 30. FIG. 6 is a front view of the notch 40 seen from arrow A in FIG. 5. As shown in FIG. 5, the plurality of notches 40 is formed at equal intervals in the circumferential direction and has the same size.

With reference to FIG. 3 in combination, the notches 40 are provided at positions avoiding the spray F injected from the fuel injection valve 17. In other words, the nozzle hole 17a of the fuel injection valve 17 is configured to be disposed opposite to a non-notch portion 50 which is a basic shape portion (i.e. the inner circumferential wall surface 30a) of the cavity 30 positioned between the adjacent notches 40. Here, in the present embodiment, the number $N_C$ of the notches 40 is set to satisfy a relationship represented by Formula (1) below in relation to the number of the nozzle holes 17a of the fuel injection valve 17 (hereinafter, referred to as the number $N_H$ of the nozzle holes).

$$N_H/2 \leq N_C \leq N_H \ldots (1)$$

Specifically, the number of the notches 40 is not less than a half the number $N_H$ of the nozzle holes and not more than the number $N_H$ of the nozzle holes. In other words, the notch 40 is configured to be positioned adjacent to at least one side in a circumferential direction of the spray F arriving at the inner circumferential wall surface 30a of the cavity 30.

In the present embodiment, the number of the notches 40 is the same as the number $N_H$ of the nozzle holes of the fuel injection valve 17. Specifically, the notches 40 are formed at 10 places of the cavity opening 31 at equal intervals in the circumferential direction. The notches 40 are positioned adjacent to each other on both sides in the circumferential direction of each spray F injected to the non-notch portion 50.

The notch 40 is formed to have a groove-shape of a predetermined width in a circumferential direction. Specifically, the notch 40 has a groove bottom wall 41 and a pair of side walls 42. The groove bottom wall 41 forms a belt-shaped bottom surface having a predetermined width in the circumferential direction and faces the center of the cavity 30. The pair of side walls 42 juts radially inward from both ends in the circumferential direction of the groove bottom wall 41, and is disposed opposite to each other in the circumferential direction.

As indicated by a dashed line in FIG. 2, the groove bottom wall 41 inclines radially inward from the piston crown surface 13a toward the peripheral recessed portion 33 of the cavity 30. More specifically, on the sectional view shown in FIG. 2, the groove bottom wall 41 is formed along a tangent line circumscribed on the peripheral recessed portion 33 of the cavity 30. In this manner, the groove bottom wall 41 and the peripheral recessed portion 33 are smoothly continuous without having folds and steps.

In the present embodiment, the groove bottom wall 41 inclines radially inward from the piston crown surface 13a toward the peripheral recessed portion 33 at an inclination angle $\alpha$ of about 30° to the center axis X of the cylinder 12a. The groove bottom wall 41 only needs not to incline radially outward toward the peripheral recessed portion 33. Therefore, the inclination angle $\alpha$ may be larger or smaller than 30° within a range of 0° (i.e. an angle at which the groove bottom wall 41 becomes parallel to the center axis X) or more. The inclination angle $\alpha$ is preferably set to be 0° or more and 50° or less.

When the inclination angle $\alpha$ is less than 0°, a path leading from the piston crown surface 13a to the notch 40 along the groove bottom wall 41 will largely bend to the radially outer side on the cross section shown in FIG. 2. This makes it difficult to smoothly introduce an air flow on the piston crown surface 13a into the cavity 30. On the other hand, the larger the inclination angle $\alpha$ becomes, the smoother is made the path leading from the piston crown surface 13a to the notch 40 on the cross section shown in FIG. 2. This makes it easier to introduce an air flow into the cavity 30 and to increase a flow rate of the air.

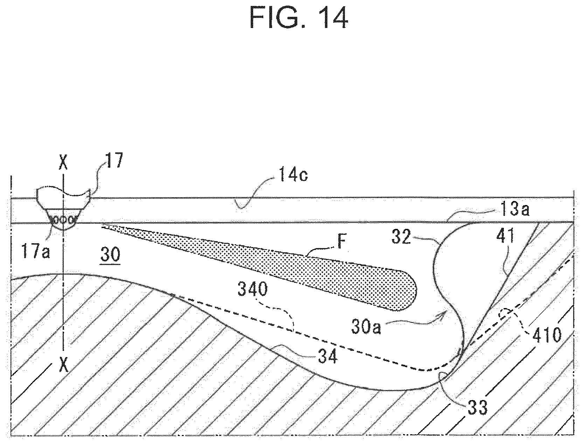

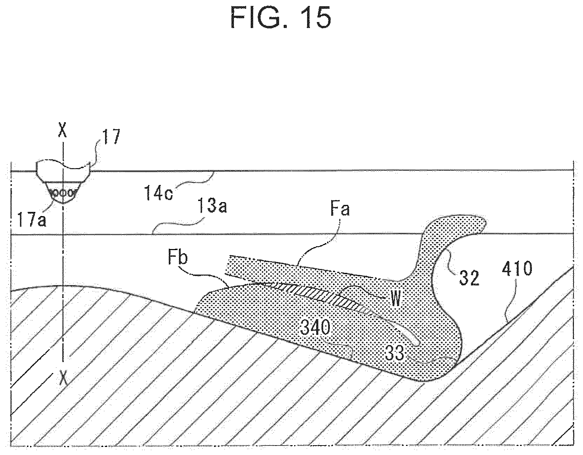

However, when the inclination angle $\alpha$ exceeds 50°, it is necessary to excessively reduce a volume of the cavity 30 in order to maintain a compression ratio of the combustion chamber 11. For example, as indicated by a dashed line in FIG. 14, with an inclination angle $\alpha$ of a groove bottom wall 410 increased to be larger than 50°, a central portion 340 of the cavity 30 can be formed to have a smaller depth. However, in such a case, since spray Fa injected from the fuel injection valve 17 and spray Fb having a direction changed by the inner circumferential wall surface 30a and guided along the central portion 340 are liable to interfere with each other (reference mark W in FIG. 15 shows an interference region) as shown in FIG. 15, the flow of the spray F is hindered to reduce mixability with air. Although it is also possible to reduce the cavity opening 31 in size, in such a case, the spray F will have relatively strong penetration at the time of arrival at the inner circumferential wall surface 30a and thus a cooling loss increases.

In the present embodiment, the notch 40 has the inclination angle $\alpha$ of the groove bottom wall 41 set to be 30°, and has an upper end positioned on the piston crown surface 13a side and being open on the piston crown surface 13a. When the inclination angle $\alpha$ of the notch 40 is small (e.g. 0°), the upper end of the notch 40 is open in the lip portion 32.

As shown in FIG. 3, the pair of side walls 42 disposed opposite to each other in the circumferential direction extends radially toward the center of the cylinder 12a. Therefore, the notch 40 is designed to have a groove width increasing toward radially outward. Additionally, as shown in FIG. 6, the pair of side walls 42 extends in parallel to the center axis X of the cylinder 12a and is orthogonal to the piston crown surface 13a.

Returning to FIG. 3, each notch 40 is formed within a predetermined angle range $\beta$ around the center axis X of the cylinder 12a. The angle range $\beta$ is set such that the non-notch portion 50 receiving the spray F is ensured within a predetermined angle range (at least 15°) in consideration of a spray angle $\theta$ (a breadth in a plan view in FIG. 3) of the spray F. In detail, the angle range $\beta$ of the notch 40 is set to be 7.5° or more and 30° or less in consideration of the assumed number of the nozzle holes (e.g. at most 16 nozzle holes) such that the non-notch portion 50 has an angle range wider than the spray angle $\theta$ of the spray F.

Specifically, the non-notch portion 50 needs to be within the angle range of at least 15° in consideration of the spray angle $\theta$ of the spray F. In this case, since when each of the plurality of notches 40 is set to have the angle range $\beta$ of 7.5°, a total of 16 non-notch portion portions 50 with the angle range of 15° can be formed, the fuel injection valve 17 with the maximum number of 16 nozzle holes can be used. Since when each of the plurality of notches 40 is set to have the angle range $\beta$ of 30°, a total of eight non-notch portion portions 50 with the angle range of 15° can be formed, the fuel injection valve 17 with the maximum number of eight nozzle holes can be used.

In the present embodiment, the angle range $\beta$ of the notch 40 is set to be 14° and the angle range of the non-notch portion 50 is set to be 22°. The angle range of the non-notch portion 50 (22°) is wider than the above lower limit angle range (15°).

The pair of side walls 42 need only extend generally radially from the center axis X of the cylinder 12a and may not necessarily be positioned on a straight line passing the center axis X. Accordingly, the pair of side walls 42 may be parallel to each other or may incline in the same direction or in directions different from each other with respect to a line radially extending from the center axis X. In this case, the groove width of the notch 40 may be fixed, or increased or decreased toward the radially outer side. In short, the non-notch portion 50 positioned between the adjacent notches 40 need only be set to have an angle range wider than the spray angle $\theta$ of the spray F.

Next, operation and effects of the embodiment will be described.

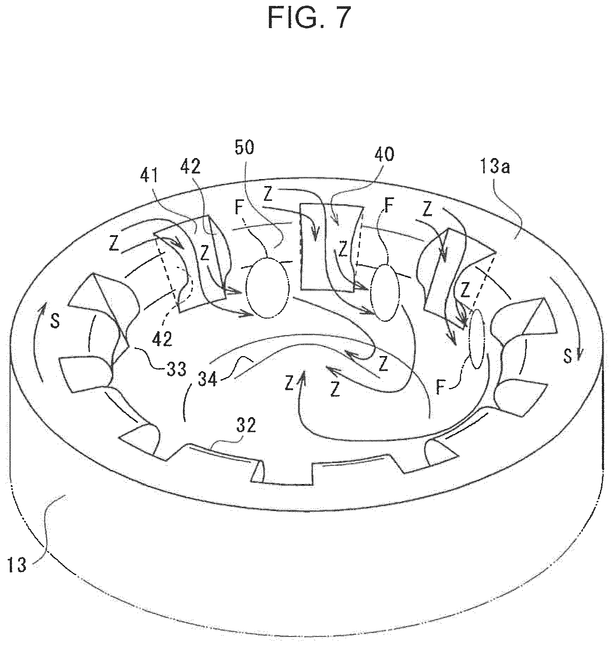

FIG. 7 is a perspective view schematically showing the spray F and the air flow Z in the combustion chamber 11 when the piston 13 is positioned in proximity to the compression top dead center. As described above, the present embodiment has a configuration in which the swirl flow S and the squish flow V are generated in the combustion chamber 11 (see FIG. 3). Thus, the horizontal flows S and V generated on the piston crown surface 13 a positioned in proximity to the compression top dead center cause generation of an air flow Z to be introduced into the cavity 30 from the notch 40.

Specifically, as a result of combination of the swirl flow S flowing clockwise in a plan view and the squish flow V flowing from the radially outer side to the radially inner side, the air flow Z is generated which flows from the inner circumferential wall surface 30 a of the cavity 30 to the central portion 34 side via the plurality of notches 40. Therefore, as shown in FIG. 7, the air flow Z introduced into the cavity will spirally flow toward the center of the central portion 34 so as to be directed to the radially inner side along the squish flow V while flowing clockwise along the swirl flow S.

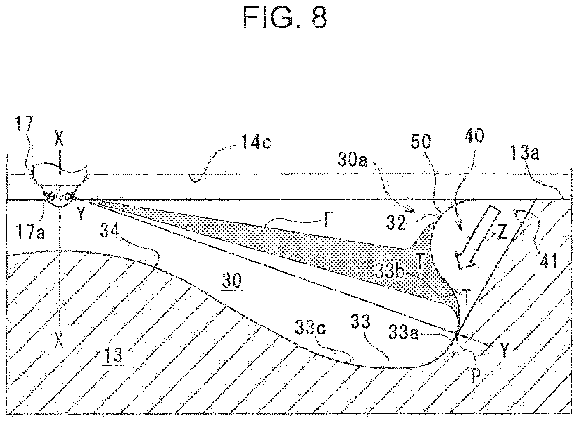

Here, FIG. 8 shows a state of a first half of the combustion in the low load range. As shown in FIG. 8, in the low load range, after the spray F injected from the fuel injection valve 17 arrives at the inner circumferential wall surface 30 a, a large part of the spray F has a direction changed to the bottom side of the cavity 30 along the peripheral recessed portion 33. However, since in the low load range, the spray F has weak penetration (i.e. low fluidity), the spray F will stay in proximity to the peripheral recessed portion 33.

By contrast, in the present embodiment, the air flow Z introduced from the notch 40 spirally flows toward the central portion 34 while involving the spray F positioned downstream in a swirl direction as shown in FIG. 7 and FIG. 8. This promotes flow of the spray F staying in the peripheral recessed portion 33 toward the central portion 34 side as shown in FIG. 8, resulting in increasing mixability of the spray F with air in the cavity 30.

Besides, since the air flow Z faces generally the same direction as the direction of the spray F staying in the peripheral recessed portion 33, the air flow Z rather assists movement of the spray F to the central portion 34 side without hindering the flow of the spray F. This further promotes the flow of the spray F. Additionally, since the groove bottom wall 41 is formed along the tangent line circumscribed on the peripheral recessed portion 33 in a cross sectional view, the air flow Z introduced from the notch 40 can be smoothly introduced into the peripheral recessed portion 33. This further promotes the flow of the spray F.

Further, since in the present embodiment, the radius $R_2$ of the arc forming the second portion 33b of the peripheral recessed portion 33 is relatively large (larger than the radius $R_1$ of the first portion 33a), it is possible to reduce an angle formed by a direction of a tangent line T in a part against which the spray F collides and by a spray direction of the spray F as shown in FIG. 8. This prevents the spray F from heavily colliding against the inner circumferential wall surface 30 a to scatter around, thereby enabling the spray F to be smoothly introduced into the second portion 33b.

Also, because of presence of the lip portion 32, the spray F colliding against the lip portion 32 near the boundary between the second portion 33b and the lip portion 32 will be also guided to smoothly flow mainly to the second portion 33b side without much scattering. In this manner, a large part of the spray F is introduced into the cavity 30.

Then, the spray F moves from the second portion 33b to the first portion 33a to have the flow direction changed from the radially outer side of the piston 13 to the radially inner side. On this occasion, since the radius $R_1$ of the first portion 33a is smaller than the radius $R_2$ of the second portion 33b, spread of the spray F is suppressed, while a flow of the spray F directed to the third portion 33c is accelerated with the assistance of the air flow Z from the notch 40.

At this time, a part of fuel has been already combusted to generate combustion gas, and the spray F is in a semi-combustion state where the combustion gas and uncombusted fuel are mixed. The flow of the spray F in the semi-combustion state (hereinafter, referred to as a semi-combusted gas) will be accelerated by the first portion 33a, thereby blowing off the fuel attached to the wall surface of the peripheral recessed portion 33. This enables suppression in an amount of soot generated due to combustion in a locally rich region including the attached fuel.

Also, the peripheral recessed portion 33 is formed to be symmetrical with respect to the straight line Y linking a position P in the first portion 33a and the nozzle hole 17a of the fuel injection valve 17, the position P being farthest from the fuel injection valve 17 at the time of fuel injection. Thus, the flow of the semi-combusted gas which is decelerated after once accelerated is converted smoothly, at the position P in the first portion 33a as a turning point, into a flow directed from the radially outer side to the radially inner side of the piston 13 without largely scattering.

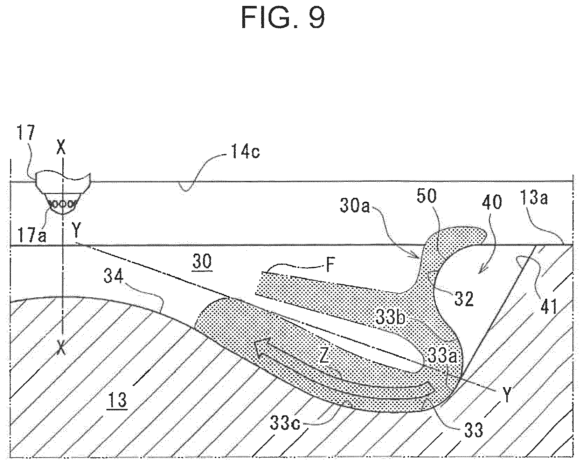

Next, description will be made of a latter half of the combustion, in which the semi-combusted gas having the direction changed to the radially inner side of the piston 13 is mixed with a large amount of air in the central portion 34 of the cavity 30. As shown in FIG. 9, the semi-combusted gas having the direction changed to the radially inner side is guided along the third portion 33c of the peripheral recessed portion 33 to move from the peripheral recessed portion 33 toward the central portion 34 of the bottom of the cavity 30 with the center part protruded.

On this occasion, since the radius $R_3$ of the third portion 33c in the peripheral recessed portion 33 is set to be larger than the radius $R_1$ of the first portion 33a, abrupt direction change of the spray F introduced into the third portion 33c to the cavity opening 31 side (upward) can be prevented. This prevents the spray F changed backward from interfering with the spray F immediately after being injected from the fuel injection valve 17.

As a result, the flow of the semi-combusted gas will flow toward the central portion 34 side of the cavity 30 while maintaining its force without being scattered and will be satisfactorily mixed with a large amount of air present in a central portion of the combustion chamber 11, resulting in generating a uniform and lean combustion gas. Then, because of progress of the combustion in the state, generation of soot due to combustion in the rich region will be suppressed, and also because the whole of the combustion gas is relatively lean, partly generated soot will be effectively oxidized.

Specifically, even the spray F liable to stay in the inner circumferential wall surface 30a of the cavity due to weak penetration is allowed to have its flow promoted to have improved mixability with air in the cavity 30.

Besides, the air flow Z is introduced into the cavity 30 from the plurality of notches 40, and the air flow Z enables the spray F injected from the plurality of nozzle holes 17a to flow to the central portion 34 side of the cavity 30. Additionally, since the spray F is injected toward the non-notch portion 50, after being guided to the inner circumferential wall surface 30a of the cavity 30 to have its direction changed, the spray F will have the flow to the central portion 34 side further promoted by the air flow Z from the notch 40, the air flow Z being introduced in the same direction as the changed direction.

Each of the plurality of notches 40 is formed within an angle range of 7.5° to 30° around the center axis X of the cylinder 12a in a plan view. Since this enables the angle range of the non-notch portion 50 to be ensured neither too large nor too small, the spray F can be satisfactorily guided by the inner circumferential wall surface 30a of the cavity 30, and the air flow Z from the notch 40 can be effectively generated.

For example, when the angle range β of the notch 40 is set to be less than 7.5°, the volume of the notch 40 becomes relatively small to reduce momentum of the air flow introduced by the notch 40 and reduce the effect of promoting the flow of spray.

Conversely, even when the angle range β of the notch 40 is increased to be larger than 30°, improvement of the effect of promoting the flow of the spray F by the notch 40 cannot be expected so much. Rather, an excessive increase in the volume of the notch 40 produces the necessity of excessively reducing the capacity of the cavity 30 in order to maintain the compression ratio of the combustion chamber 11. In this case, this is disadvantageous in terms of mixability of spray and a cooling loss as already described with reference to FIG. 14 and FIG. 15. Specifically, the shallow combustion chamber 11 makes sprays injected from the fuel injection valve 17 be liable to interfere with each other to reduce mixability of sprays with air. On the other hand, when the cavity opening 31 is reduced in size, the spray F will have relatively strong penetration at the time of arrival at the inner circumferential wall surface 30a and thus a cooling loss increases.

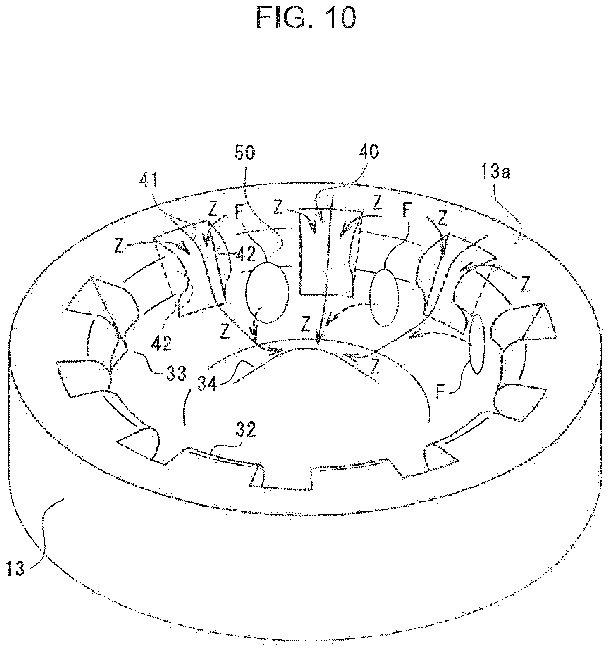

Although in the above embodiment, at least one of the two intake ports 14a includes the helical port and/or the tangential port to cause generation of a swirl flow S in the combustion chamber 11, the above embodiment is not limited thereto. Specifically, as shown in FIG. 10, even when the swirl flow S is barely generated in the combustion chamber 11 by the intake port and mainly the squish flow V is generated, fluidity of the spray F can be increased.

In detail, in the notch 40 and on a path of the air flow Z introduced from the notch 40 into the cavity 30, a pressure is liable to be reduced compared to the surroundings due to function of a strong air flow. Due to the pressure decrease, the spray F positioned in the surroundings of the notch 40 and the air flow Z is drawn to the air flow Z and is directed toward the central portion 34 side together with the air flow Z. Accordingly, even when the swirl flow S is barely generated and mainly the squish flow V is generated, the flow of the spray F toward the central portion 34 side can be promoted by the notch 40.

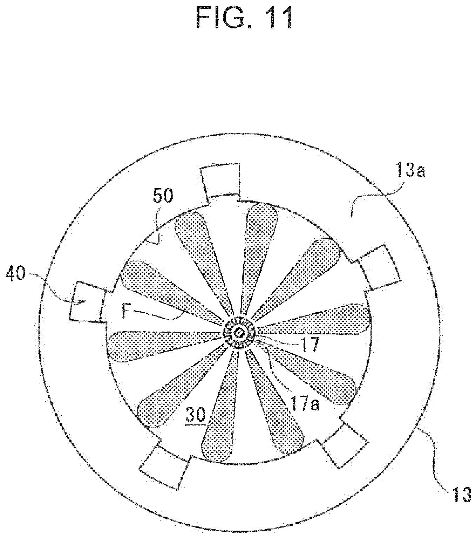

FIG. 11 to FIG. 13, which are plan views of the combustion chamber 11, show a modification in which the number $N_C$ of the notches 40 is half the number $N_H$ of the nozzle holes of the fuel injection valve 17. In the example shown in FIG. 11, the number $N_H$ of the nozzle holes is ten and the number $N_C$ of the notches 40 is five. Each spray F injected from the fuel injection valve 17 is, on one side in the circumferential direction, adjacent to the notch 40 and is, on the other side, adjacent to the spray F.

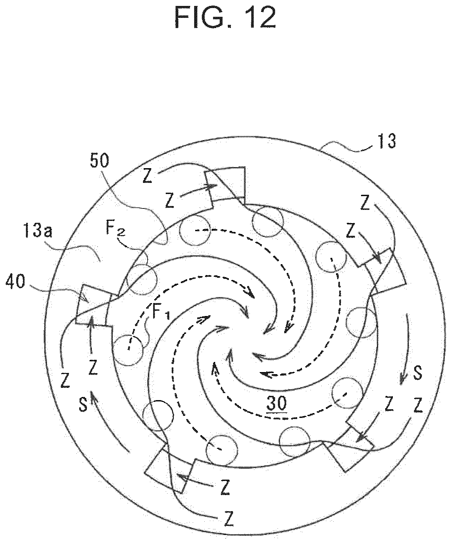

In this case, when the swirl flow S is generated in the combustion chamber 11, as shown in FIG. 12, the air flow Z, while drawing spray $F_1$ adjacent on the upstream side in the swirl direction S (counterclockwise side in FIG. 12) due to its reduced pressure, functions to involve spray $F_2$ adjacent on the downstream side in the swirl direction S (clockwise side in FIG. 12) so as to cause the spray F to flow toward the central portion 34 side of the cavity 30.

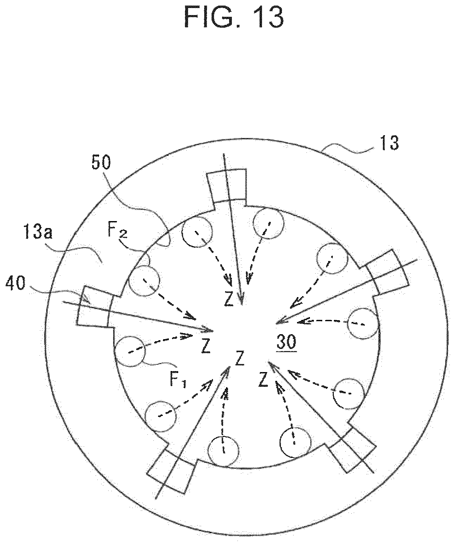

When the swirl flow S is barely generated in the combustion chamber 11 and mainly the squish flow V is generated, as shown in FIG. 13, the air flow Z functions to cause the spray F to flow to the central portion 34 side of the cavity 30, while drawing the sprays $F_1$ and $F_2$ adjacent on both sides in the circumferential direction due to its reduced pressure.

The angle range β of the notch 40 may be set as a function of the number $N_H$ of the nozzle holes. In this case, the number $N_H$ of the nozzle holes of the fuel injection valve 17 and the angle range β of the notch 40 are set to satisfy a relationship represented by Formula (2) below.

$$(360° \times 0.1)/N_H \le \beta \le (360° - N_H \times 15°)/N_H \, ... \, (2)$$

Specifically, in a case where the angle range β is set to be a lower limit value, the total of the angle ranges β of all the notches 40 is ensured to be at least 10% of a peripheral portion of the piston crown surface 13a, and therefore, a flow rate of the air flow introduced into the cavity 30 via the notch 40 can be ensured. In a case where the angle range β is set to be an upper limit value, the non-notch portion 50 can be ensured within an angle range of at least 15°, and therefore, the spray F can be guided to the cavity 30 along the inner circumferential wall surface 30a while being received by the non-notch portion 50.

Although the above embodiment has been described with respect to a piston having a reentrant type cavity as an example, a piston having a cavity of each of various types such as a shallow bottom type and a toroidal type is also applicable.

Also, although in the above embodiment, the plurality of notches 40 is provided in the circumferential edge of the cavity opening 31, the above embodiment is not limited thereto. In other words, only one notch may be provided. This arrangement also enables an air flow to be introduced from the notch 40 into the cavity 30.

**Examples**

With respect to the piston 13 in each of Examples 1 to 4, the air flow Z in the cavity 30 was evaluated by CAE analysis. As shown in Table 1, Examples 1 to 4 are the same except for the inclination angle α of the groove bottom wall 41 of the notch 40. Specifically, in each notch 40, the number $N_H$ of the nozzle holes of the fuel injection valve 17 is 10, the number $N_C$ of the notches 40 is similarly 10, and the angle range β in the circumferential direction is 14°.

In Example 1, the inclination angle α of the notch 40 (the groove bottom wall 41) is 0°, and in Examples 2 to 4, the inclination angles α of the notch 40 become sequentially larger, 20°, 30°, and 45°. The air flows Z of the pistons 13 having the notches 40 according to Examples 1 to 4 in a low speed region were evaluated at the respective maximum flow speeds, which are shown in Table 1 where relative to a maximum flow speed of the air flow in Example 1 as 100, maximum flow speeds of Examples 2 to 4 are represented by indexes.

[Table 1]

|  | EXAMPLE 1 | EXAMPLE 2 | EXAMPLE 3 | EXAMPLE 4 |
|---|---|---|---|---|
| THE NUMBER $N_H$ OF NOZZLE HOLES | 10 | 10 | 10 | 10 |
| THE NUMBER $N_C$ OF NOTCH PORTIONS | 10 | 10 | 10 | 10 |
| INCLINATION ANGLE α OF NOTCH PORTION | 0° | 20° | 30° | 45° |
| ANGLE RANGE β OF NOTCH PORTION | 14° | 14° | 14° | 14° |
| MAXIMUM FLOW SPEED | 100 | 148 | 324 | 370 |

As is clear from Table 1, as the inclination angle α of the notch 40 is increased from 0°, the maximum flow speed of the air flow Z is increased. As is clear, in particular, from Example 2 and Example 3, as the inclination angle α becomes larger than 20°, the maximum flow speed of the air flow Z is conspicuously increased. On the other hand, as can be found from Example 3 and Example 4, as the inclination angle α becomes larger than 30°, a rise margin of the maximum flow speed converges accordingly.

Therefore, by setting the inclination angle α of the notch 40 to be 0° or more, the maximum flow speed of the air flow Z can be increased, thereby increasing fluidity of the spray F in the cavity 30. On the other hand, by setting the inclination angle α of the notch 40 to be 50° or less, fluidity of the spray F can be effectively increased while preventing the range of the notch 40 from being excessively large.

The features of the diesel engine according to the above embodiments are summarized as follows.

The diesel engine includes a cylinder; a cylinder head which covers an end surface of the cylinder; a fuel injection valve attached to the cylinder head; and a piston provided inside the cylinder so as to be reciprocatable. The piston has a cavity recessed from a crown surface to a side opposite to the cylinder head so as to be capable of receiving fuel injected from the fuel injection valve when the piston is positioned at a top dead center. The piston further has, in a part of a circumferential edge of an opening of the cavity, a notch which is recessed radially outward in a region from an inner circumferential wall surface of the cavity over to the crown surface. The notch inclines radially inward at an angle of 0° to 50° relative to a center axis of the cylinder from the crown surface toward the inner circumferential wall surface.

According to the configuration, a horizontal air flow (e.g. a swirl flow or a squish flow) generated on the piston crown surface in proximity to the top dead center is introduced so as to be directed from the inner circumferential wall surface of the cavity toward the central portion side through the notch. Since the air flow introduced through the notch promotes a flow of spray near the inner circumferential wall surface of the cavity toward the central portion side, mixability of spray with air is increased. Specifically, even the spray liable to stay in the inner circumferential wall surface of the cavity due to weak penetration is allowed to have its flow promoted to have improved mixability with air in the cavity.

Besides, the notch inclines radially inward at an angle of 0° to 50° relative to the center axis of the cylinder from the crown surface of the piston toward the inner circumferential wall surface of the cavity. As a result, the air flow from the notch can be effectively generated on the radially inner side.

Specifically, in a case where the above inclination angle of the notch is less than 0°, i.e. where the notch inclines to the radially outer side, the air flow on the crown surface of the piston will be introduced to be directed to the radially outer side. Thus, a radially inward flow of the spray can be easily prevented.

When the above inclination angle of the notch is larger than 50°, the volume of the notch becomes excessively large, so that the volume of the cavity is necessitated to be excessively small in order to maintain a compression ratio of a combustion chamber. A shallow combustion chamber for the reduction of the volume of the cavity makes sprays liable to interfere with each other to reduce the effect of increasing mixability with air. On the other hand, a small opening diameter of the combustion chamber for the reduction in the volume of the cavity makes penetration of spray strong. Thus, a cooling loss increases.

A plurality of the notches is preferably formed at intervals from each other in a circumferential direction.

According to the configuration, since an air flow is introduced into the cavity from the plurality of notches, the flow of the spray toward the cavity central portion side can be further enhanced.

Preferably, the fuel injection valve is positioned at the center in a radial direction of the cylinder when viewed from a center axis direction and has a plurality of nozzle holes capable of radially injecting fuel.

The configuration enables spray injected from the plurality of nozzle holes to flow toward the cavity central portion side by the air flow introduced from the notches. In this manner, it is possible to spread, generally evenly in the cavity, spray having promoted mixing with air.

The fuel injection valve preferably has a nozzle hole capable of injecting fuel directed to a non-notch portion as a part other than the notch in the circumferential edge of the opening of the cavity.

According to the configuration, the spray injected toward the non-notch portion is guided to the central portion side by the inner circumferential wall surface of the cavity, and the flow of spray toward the central portion side is further promoted by the air flow introduced from the notch.

**Industrial Applicability**

As described in the foregoing, the diesel engine according to the present invention, in which even spray having weak penetration is allowed to have fluidity in a cavity increased to have promoted mixing with air, can be suitably used in the field of a manufacturing technique of this kind.

**Claims**

1.  A diesel engine comprising:

    a cylinder;
    a cylinder head which covers an end surface of the cylinder;
    a fuel injection valve attached to the cylinder head; and
    a piston provided inside the cylinder so as to be reciprocatable and having a cavity recessed from a crown surface to a side opposite to the cylinder head so as to be capable of receiving fuel injected from the fuel injection valve when the piston is positioned at a top dead center, wherein
    the piston further has, in a part of a circumferential edge of an opening of the cavity, a notch which is recessed radially outward in a region from an inner circumferential wall surface of the cavity over to the crown surface, the notch inclining radially inward at an angle of 0° to 50° relative to a center axis of the cylinder from the crown surface toward the inner circumferential wall surface.

2.  The diesel engine according to claim 1, wherein a plurality of the notches is formed at intervals from each other in a circumferential direction.

3.  The diesel engine according to claim 1 or 2, wherein the fuel injection valve is positioned at the center in a radial direction of the cylinder when viewed from a center axis direction and has a plurality of nozzle holes capable of radially injecting fuel.

4. The diesel engine according to any one of claims 1 to 3, wherein
the fuel injection valve has a nozzle hole capable of injecting fuel directed to a non-notch portion as a part other than the notch in the circumferential edge of the opening of the cavity.

# FIG. 1

# FIG. 2

EP 3 530 906 A1

# FIG. 3

# FIG. 4A

FIG. 4B

# FIG. 5

# FIG. 6

# FIG. 7

FIG. 8

FIG. 9

# FIG. 10

# FIG. 11

# FIG. 12

FIG. 13

# FIG. 14

# FIG. 15

## INTERNATIONAL SEARCH REPORT

| International application No. |
| --- |
| PCT/JP2017/041127 |

**A. CLASSIFICATION OF SUBJECT MATTER**
Int.Cl. F02B23/06(2006.01)i, F02F3/26(2006.01)i, F16J1/09(2006.01)i

According to International Patent Classification (IPC) or to both national classification and IPC

**B. FIELDS SEARCHED**

Minimum documentation searched (classification system followed by classification symbols)
Int.Cl. F02B23/06, F02F3/26, F16J1/09

| Documentation searched other than minimum documentation to the extent that such documents are included in the fields searched | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-246859 A (ISUZU MOTORS LTD.) 13 December 2012, paragraphs [0002], [0017]-[0026], fig. 1-3 (Family: none) | 1-4 |
| A | Microfilm of the specification and drawings annexed to the request of Japanese Utility Model Application No. 137388/1979 (Laid-open No. 55727/1981) (YANMAR DIESEL ENGINE CO., LTD.) 14 May 1981, pp. 2-5, fig. 2-5 (Family: none) | 1-4 |
| A | JP 5-202755 A (HINO MOTORS, LTD.) 10 August 1993, fig. 4 (Family: none) | 1-4 |

☐ Further documents are listed in the continuation of Box C.     ☐ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>06 December 2017 (06.12.2017) | Date of mailing of the international search report<br>19 December 2017 (19.12.2017) |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 530 906 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015232288 A